# EUROPÄISCHE PATENTSCHRIFT

(11) **EP 1 662 581 B1**
(45) Veröffentlichungstag und Bekanntmachung des Hinweises auf die Patenterteilung: **27.05.2009**
(21) Anmeldenummer: 05024354.2
(22) Anmeldetag: 09.11.2005
(51) Int. Cl.: H01L 31/042

(54) **Wandverkleidungsplatte für eine Gebäudeaussenwand mit einem Solargenerator**
Wall panel for buildings with solar generator
Panneau pour le revêtement de parois avec générateur solaire

(30) Priorität: 25.11.2004 DE 102004057042
(43) Veröffentlichungstag der Anmeldung: 31.05.2006
(73) Patentinhaber: BBG GmbH & Co. KG, 87119 Mindelheim (DE)
(72) Erfinder: Brandner, Hans, 85221 Dachau (DE)
(74) Vertreter: Wiese, Gerhard

(56) Entgegenhaltungen:
- EP-A- 1 020 929
- EP-A- 1 447 852
- DE-A1- 19 921 044
- US-A1- 2003 070 368
- US-A1- 2004 221 529

## Beschreibung

Die Erfindung betrifft eine Wandverkleidungsplatte für eine Gebäudeaußenwand mit einem Solargenerator und mit einem die Platte umgebenden Rahmen gemäß dem Oberbegriff des Patentanspruchs 1.

Derartige Wandverkleidungsplatten sind beispielsweise aus der EP 1 020 929 A1 bekannt. Bei dieser werden Photovoltaikelemente auf einem erhöhten Mittelbereich eines Kunststoffrahmens angeschraubt und durch aufgeklebte Dichtstreifen abgedichtet

Aus der US 4,223,667 A ist eine weitere Wandverkleidungsplatte bekannt, bei der der Rahmen ein Metallprofil aufweist, das mit einem Schenkel eine außen liegende Glasscheibe übergreift.

Nachteilig bei den bekannten Wandverkleidungsplatten ist, dass der Rahmen nicht bündig mit der Außenfläche ist und außerdem die Montage und Abdichtung der Wandverkleidungsplatten aufwendig ist.

Aufgabe der Erfindung ist es, eine verbesserte Wandverkleidungsplatte zu schaffen, die die vorstehend beschriebenen Nachteile beseitigt.

Diese Aufgabe wird durch die Merkmale des Patentanspruchs 1 gelöst. Vorteilhafte Ausgestaltungen der Erfindung sind den Unteransprüchen zu entnehmen.

Nachfolgend werden Ausführungsbeispiele der erfindungsgemäßen Wandverkleidungsplatte unter Bezugnahme auf die Zeichnungen näher erläutert Es zeigt:
- Fig. 1: einen Schnitt durch zwei an einer Gebäudeaußenwand angeordnete Wandverkleidungsplatten in deren Verbindungsbereich,
- Fig. 2: eine perspektivische Draufsicht auf ein Gebäudedach mit mehreren im Verbund mit den umgebenden Dachziegeln angeordneten Wandverkleidungsplatten,
- Fig. 3: einen Schnitt durch den Verbindungsbereich zweier benachbarter Wandverkleidungsplatten gemäß der Schnittlinie III-III in Fig. 2,
- Fig. 4: eine alternative Ausführungsform zur Fig. 1,
- Fig. 5: eine weitere Alternative für eine formschlüssige Verbindung benachbarter Wandverkleidungsplatten, und
- Fig. 6: eine weitere Alternative für eine formschlüssige Verbindung benachbarter Wandverkleidungsplatten.

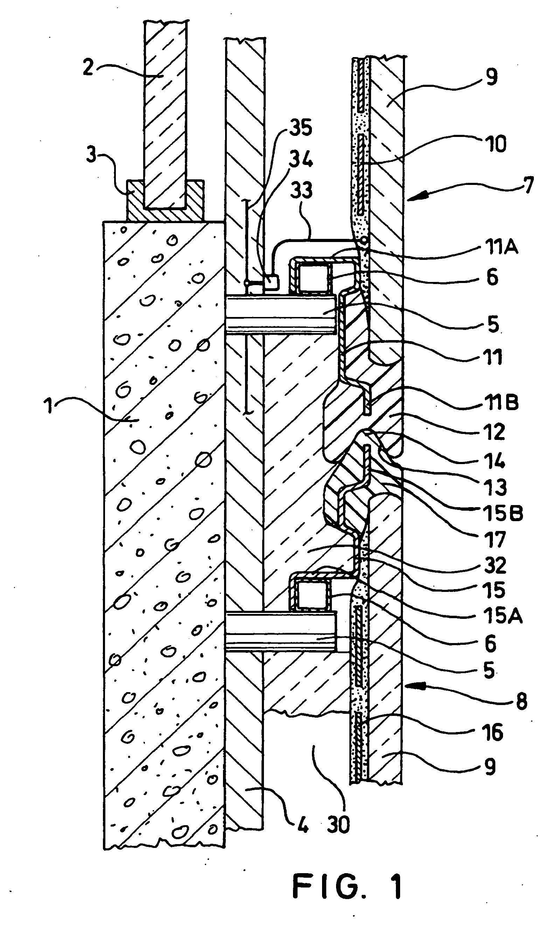

Die in Fig. 1 dargestellte Gebäudeaußenwand 1 mit einer darin vorgesehenen, in einem Fensterrahmen 3 gelagerten Fensterscheibe 2 ist mittels einer in Abstand zu dieser montierten Konstruktion von Wandverkleidungsplatten verkleidet. Im dargestellten Ausschnitt ist nur ein Verbindungsbereich zwischen zwei benachbarten Wandverkleidungsplatten 7 und 8 dargestellt.

Zur Anbringung der Wandverkleidungsplatten 7 bzw. 8 ist die Gebäudeaußenwand 1 an ihrer Außenseite mit einer Unterkonstruktion 4 versehen, an der Befestigungsbolzen 5 in bestimmten Abständen nach außen vorstehend befestigt sind. An den Befestigungsbolzen 5 sind quer verlaufende Befestigungsprofile 6 angeordnet.

Die obere dargestellte Wandverkleidungsplatte 7 weist eine außen liegende Glasscheibe 9 auf, die auf ihrer der Gebäudeaußenwand 1 zugewandten Innenseite mit einem Verbund von Solarzellen 10 versehen ist, die beispielsweise in Schmelzkleberfolien eingebettet mit der Innenseite der Glasscheibe 9 verbunden sind. Dabei sind die auf Höhe der Fensterscheibe 2 angeordneten Solarzellen 10 als transparente Solarzellen ausgebildet, so dass eine Durchsicht und ein Lichtdurchlass möglich ist. Der Verbund von Solarzellen 10 ist mit der Glasscheibe 9 und einem Tragrahmen 11 durch einen im Randbereich der Glasscheibe 9 durch Anschäumen oder Anspritzen angeformten Kunststoffrahmen 12 verbunden. Ein Teil des Tragrahmens 11 erstreckt sich als Versteifungsprofil 11B im vorzugsweise von Polyurethan gebildeten Material des Kunststoffrahmens 12. Ein anderer Teil des Tragrahmens 11 ragt als am äußeren Ende nach unten abgewinkelter Tragwinkel 11A nach innen aus dem Kunststoffmaterial des Kunststoffrahmens 12 vor und dient zur Montage der Wandverkleidungsplatte 7 am Befestigungsprofil 6. Die Befestigung erfolgt dabei durch einfaches Einhängen von oben. Der Kunststoffrahmens 12 weist im Bereich seiner nach unten gerichteten Kante eine V-förmige Aufnahme 13 auf, in welche ein komplementär geformter Vorsprung 14 der benachbart darunter angeordneten Wandverkleidungsplatte 8 eingreift.

Diese Wandverkleidungsplatte 8 ähnelt in ihrem Aufbau der oberen Wandverkleidungsplatte 7. An der Innenseite einer Glasscheibe 9 ist wiederum ein Verbund von Solarzellen 16 angeordnet, die in diesem Falle jedoch als nicht transparente monokristalline oder nicht transparente polykristalline Solarzellen ausgebildet sind. Diese Solarzellen 16 haben einen höheren Wirkungsgrad als die transparenten Solarzellen 10. Daher werden in den Bereichen der Gebäudeaußenwand 1, die geschlossen ohne Fensteröffnungen ausgebildet sind, bevorzugt solche Wandverkleidungsplatten 8 mit kristallinen Solarzellen 16 verwendet. Die Wandverkleidungsplatte 8 weist einen Kunststoffrahmen 17 auf, der den Verbund von Solarzellen 16 im Randbereich der Glasscheibe 9 mit einem Tragrahmen 15 verbindet. Der Tragrahmen 15 ist wiederum mit einem Versteifungsprofil 15B im Kunststoffmaterial des Kunststoffrahmens 17 eingebettet und weist einen an der Innenseite vorspringenden Tragwinkel 15A mit einem nach unten abgewinkelten Ende auf, der zur Montage mittels Einhängen an einem Befestigungsprofil 6 dient.

Zwischen der Unterkonstruktion 4 und den Wandverkleidungsplatten 7 bzw. 8 ist entweder ein mit Luft als Isolierschicht gefüllter Zwischenraum 30 vorhanden, oder dieser Zwischenraum wird unter Aussparung des Bereichs der Fensterscheiben 2 mit einem Isoliermaterial 32 ausgefüllt. In jedem Falle tragen die Wandverkleidungsplatten 7 bzw. 8 neben der Erzeugung von elektrischer Energie auch erheblich zur Wärmedämmung des Gebäudes bei.

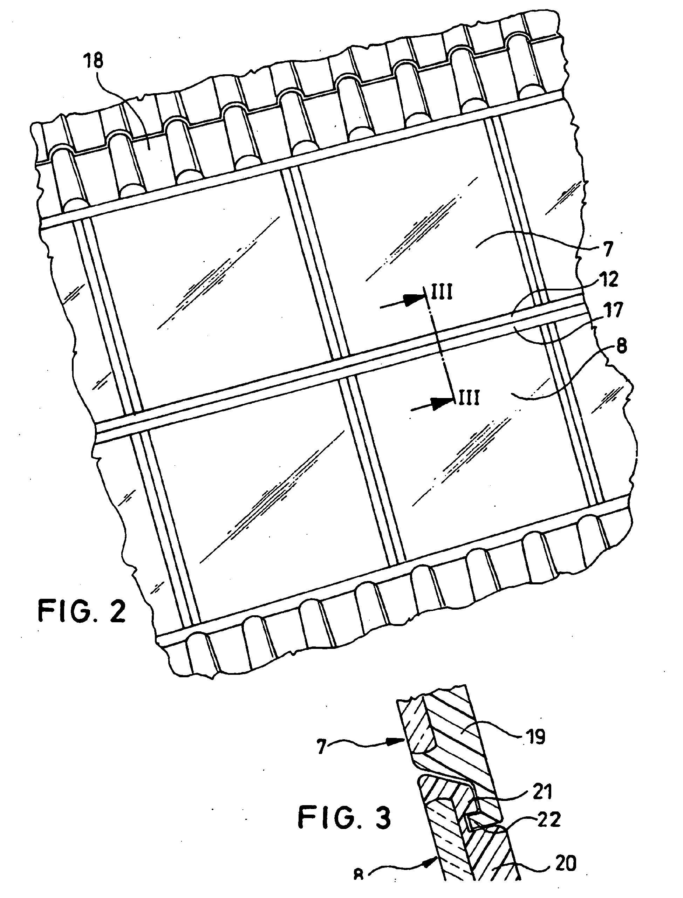

Als Gebäudeaußenwand ist auch ein Dach eines Gebäudes anzusehen, wie das Ausführungsbeispiel gemäß den Figuren 2 und 3 zeigt. Hier sind in eine Dachfläche, die im übrigen mit Dachziegeln 18 abgedeckt ist, mehrere Wandverkleidungsplatten 7 bzw. 8 eingebettet, die sowohl mit einer einfachen Verglasung als Fensterfläche, als auch mit Solarzellen versehen ausgebildet sein können. Dabei sind sowohl transparente Solarzellen 10 als auch undurchsichtige Solarzellen 16 möglich, je nachdem, ob eine Durchsicht erwünscht ist und welcher Wirkungsgrad bei der Erzeugung von elektrischer Energie erreicht werden soll. Wie Fig. 3 zeigt, sind die Wandverkleidungsplatten 7 bzw. 8 im Randbereich jeweils von einem Kunststoffrahmen 19 bzw. 20 umschäumt, wobei an diesen Kunststoffrahmen Formteile 21 bzw. 22 ausgebildet sind, die einen überlappenden formschlüssigen und wasserdichten Eingriff zweier benachbarter Wandverkleidungsplatten untereinander oder auch mit den benachbarten Dachziegeln 18 ermöglichen.

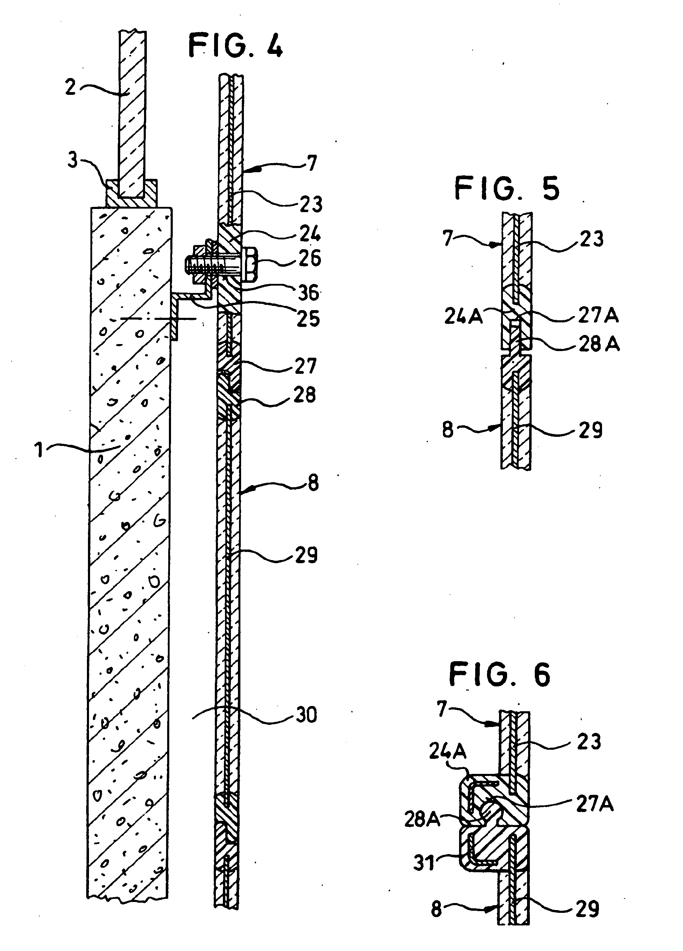

Im Ausführungsbeispiel gemäß Fig. 4 ist an einer Gebäudeaußenwand 1 ein Verbund von Wandverkleidungsplatten 7 bzw. 8 ohne eine durchgehende Unterkonstruktion angebracht. Dazu werden Befestigungswinkel 25 beispielsweise durch Schrauben am Mauerwerk der Gebäudeaußenwand 1 befestigt. An diesen Befestigungswinkeln 25 werden dann die Wandverkleidungsplatten 7 bzw. 8 beispielsweise durch Befestigungsschrauben 26 befestigt, die in einem Kunststoffrahmen 24 im Randbereich als Mittel zur Befestigung integrierte Bohrungen 36 durchdringen. Die Bohrungen 36 können selbstverständlich - anders als dargestellt - auch zur Aufnahme von Senkkopfschrauben ausgebildet sein, so dass dann keine vorstehenden Schraubenköpfe das glattfächige Erscheinungsbild der Fassade trüben. Die in Höhe einer Fensterscheibe 2 angeordnete Wandverkleidungsplatte 7 ist mit einem Verbund von transparenten Solarzellen 23 versehen, so dass die Durchsicht und der Lichteinfall zur Fensterscheibe 2 gegeben ist. Der Kunststoffrahmen 24 weist an seiner nach unten gerichteten Kante ein Formteil 27 auf, das mit einem außen liegenden, nach unten weisenden Vorsprung komplementär zu einem Formteil 28 ausgebildet ist, das sich an der oberen Kante der nach unten anschließenden Wandverkleidungsplatte 8 befindet. Die Wandverkleidungsplatte 8 liegt im geschlossenen Bereich der Gebäudeaußenwand 1 und ist daher mit kristallinen Solarzellen 29 ausgestattet.

In den Figuren 5 und 6 sind weitere Beispiele für einen formschlüssigen Eingriff bzw. eine formschlüssigen Überdeckung benachbarter Wandverkleidungsplatten 7 bzw. 8 dargestellt. Dabei weist in Fig. 5 ein Kunststoffrahmen 24A an einem Formteil 27 an der Unterkante einer Wandverkleidungsplatte 7 im mittleren Bereich eine im Querschnitt rechteckige Nut 27A auf, die von zwei Vorsprüngen an der Innenseite und an der Außenseite begrenzt wird. In diese Nut 27A greift ein sich mittig nach oben erstreckender Vorsprung 28A eines Formteils 28 an der Oberkante einer darunter angeordneten Wandverkleidungsplatte 8 formschlüssig ein, wobei die überlappende Verbindung der beiden Formteile 27 und 28 einen Ausgleich der Wandverkleidungsplatten 7 und 8 in Längsrichtung ermöglicht, wie er beispielsweise zur Kompensation von Wärmedehnungen benötigt wird.

Im Ausführungsbeispiel gemäß Fig. 6 weist ein Kunststoffrahmen 24A an der Unterkante einer Wandverkleidungsplatte 7 ein Formteil 27A mit einer im Querschnitt Schlüsselloch-förmigen Aussparung auf, in die ein komplementär geformter Vorsprung eines Formteils 28A am Kunststoffrahmen einer darunter angeordneten Wandverkleidungsplatte 8 eingreift. In diesem Falle entsteht eine besonders dichte und sichere Verbindung zwischen den Formteilen, so dass eine derartige Fassade auch starken Winden keinerlei Angriffsfläche bietet. Zur Versteifung sind in die Kunststoffrahmen auch hier bevorzugt Versteifungsprofile 31 eingebettet.

Die in den Solarzellen 10 bzw. 16 oder 23 bzw. 29 erzeugte elektrischer Energie wird über eine, bevorzugt in den Kunststoffrahmen 12 bzw. 17 oder 19 bzw. 20 eingebettete Kontaktierung 33 an einen mit der Gebäudeaußenwand 1 verbundenen elektrischer Leiter 35 abgegeben. Der Leiter 35 kann beispielsweise in die Unterkonstruktion 4 integriert sein. Dabei sind bevorzugt an der Außenseite der Unterkonstruktion 4 Anschlussbuchsen 34 vorhanden, in welche die Kontaktierung 33 bei der Montage der Wandverkleidungsplatten 7 bzw. 8 unmittelbar durch entsprechend vorspringende Pins oder durch Kopplung von Hand eingreift. Auf die gleiche Art können mittels integrierter Kontaktierungen auch Gruppen von Wandverkleidungsplatten untereinander elektrisch verschaltet werden. Dabei können auch elektronische Bauteile, wie Gleichrichter oder Wechselrichter, für eine Wandlung der elektrischen Energie vorzugsweise in die Kunststoffrahmen der Wandverkleidungsplatten integriert sein.

Durch die Erfindung werden Wandverkleidungsplatten geschaffen, die in großen Stückzahlen in entsprechenden Formen in einfacher Weise durch Umschäumen oder Umspritzen hergestellt werden können, die aufgrund der integrierten Mittel zur Befestigung in einfacher Weise an einer Gebäudeaußenwand oder in einem Dach eines Gebäudes angebracht werden können, die aufgrund der bevorzugt bündigen Anordnung der Kunststoffrahmen mit den außen liegenden Glasscheiben für ein glattflächiges Erscheinungsbild und eine leichte Reinigung der Fassaden sorgen und die durch die im Randbereich ausgebildeten, ineinander greifenden Elemente für einen formschlüssigen Eingriff bzw. eine formschlüssige Überdeckung einen dichten Verbund von Wandverkleidungsplatten mit einer hervorragenden Wärmeisolierung schaffen. Durch die flexible Ausbildung mit undurchsichtigen und oder transparenten Solarzellen kann eine partielle Durchsicht mit einer guten Energieausbeute kombiniert werden.

### Bezugszeichenliste

- 1: Gebäudeaußenwand
- 2: Fensterscheibe
- 3: Fensterrahmen
- 4: Unterkonstruktion
- 5: Befestigungsbolzen
- 6: Befestigungsprofil
- 7: Wandverkleidungsplatte
- 8: Wandverkleidungsplatte
- 9: Glasscheibe
- 10: (transparente) Solarzellen
- 11: Tragrahmen
- 11A: Tragwinkel
- 11B: Versteifungsprofil
- 12: Kunststoffrahmen
- 13: Aufnahme
- 14: Vorsprung
- 15: Tragrahmen
- 15A: Tragwinkel
- 15B: Versteifungsprofil
- 16: (kristalline) Solarzellen
- 17: Kunststoffrahmen

- 18: Dachziegel
- 19: Kunststoffrahmen
- 20: Kunststoffrahmen
- 21: Formteil
- 22: Formteil
- 23: (amorphe) Solarzellen
- 24: Kunststoffrahmen
- 25: Befestigungswinkel
- 26: Befestigungsschraube
- 27: Formteil
- 28: Formteil
- 29: (kristalline) Solarzellen
- 30: Zwischenraum
- 31: Versteifungsprofil
- 32: Isoliermaterial
- 33: Kontaktierung
- 34: Anschlussbuchse
- 35: Leiter
- 36: Bohrung

## Patentansprüche

1. Wandverkleidungsplatte (7,8) für eine Gebäudeaußenwand (1) mit einer außen liegenden Glasscheibe (9) und einem daran befestigten Solargenerator (10,16,23,29), mit einem die Glasscheibe (9) und den Solargenerator (10,16, 23,29) bündig umgebenden, gespritzten oder geschäumten Kunststoffrahmen (12, 17, 19, 20, 24), in den Mittel (11A, 15A, 36) zur Befestigung der Wandverkleidungsplatte (7,8) an der Gebäudeaußenwand (1) integriert sind, **dadurch gekennzeichnet ,dass** der Kunststoffrahmen im Randbereich wechselweise auf gegenüberliegenden Seiten zueinander komplementäre Elemente (13, 14, 21, 22, 27, 28, 27a, 28a) für einen formschlüssigen Eingriff bzw. eine formschlüssigen Überdeckung benachbarter Wandverkleidungsplatten (7, 8) aufweist.

2. Wandverkleidungsplatte nach Anspruch 1, **dadurch gekennzeichnet, dass** in den Kunststoffrahmen (12, 17, 19, 20, 24) Versteifungsprofile (11 B, 15B, 31) integriert sind.

3. Wandverkleidungsplatte nach Anspruch 2, **dadurch gekennzeichnet, dass** die Mittel zur Befestigung (11A, 15A) an den Versteifungsprofilen (11B, 15B) ausgebildet sind

4. Wandverkleidungsplatte nach einem der vorhergehenden Ansprüche, **dadurch gekennzeichnet dass** die Mittel zur Befestigung (11A, 15A) als Tragwinkel für einen Eingriff an einem mit der Gebäudeaußenwand verbundenen Befestigungsprofil (6) ausgebildet sind.

5. Wandverkleidungsplatte nach einem der Ansprüche 1 bis 3, **dadurch gekennzeichnet, dass** die Mittel zur Befestigung als Bohrungen (36) ausgebildet sind, welche für den Durchgang von Befestigungsschrauben (26) dienen.

6. Wandverkleidungsplatte nach einem der vorhergehenden Ansprüche, **dadurch gekennzeichnet, dass** für eine Befestigung an einer geschlossenen Gebäudeaußenwand (1) Solargeneratoren mit kristallinen Solarzellen (16, 29) vorgesehen sind.

7. Wandverirkleidungsplatte nach einem der Ansprüche 1 bis 5, **dadurch gekennzeichnet, dass** für eine Befestigung an einer mit einer Fensterscheibe (2) versehenen Fläche der Gebäudeaußenwand (1) Solargeneratoren mit transparenten Solarzellen (10, 23) vorgesehen sind.

8. Wandverkleidungsplatte nach einem der vorhergehenden Ansprüche, **dadurch gekennzeichnet, dass** Mittel für eine elektrische Kontaktierung (33) der Solargeneratoren untereinander und/oder zu einer Anschlussbuchse (34) eines an der Gebäudeaußenwand (1) angeordneten elektrischen Leiters (35) in den Kunststoffrahmen (12, 17, 19, 20, 24) integriert sind.

9. Wandverkleidungsplatte nach einem der vorhergehenden Ansprüche, **dadurch gekennzeichnet, dass** die Elemente (13,14,21,22,27,28) nach außen eine glatte Fläche bilden.

## Claims

1. Wall cladding panel (7, 8) for an outer wall (1) of a building, having a glass pane (9) located on the outside and a solar generator (10, 16, 23, 29) fixed thereto, having an injection moulded or foamed plastic frame (12, 17, 19, 20, 24) which surrounds the glass pane (9) and the solar generator (10, 16, 23, 29) flush and in which means (11A, 15A, 36) for fixing the wall cladding panel (7, 8) to the building outer wall (1) are integrated, **characterized in that** the plastic frame has in the edge region, alternately on opposite sides, mutually complementary elements (13, 14, 21, 22, 27, 28, 27a, 28a) for form-fitting engagement or form-fitting coverage of adjacent wall cladding panels (7, 8).

2. Wall cladding panel according to Claim 1, **characterized in that** stiffening profiles (11B, 15B, 31) are integrated into the plastic frame (12, 17, 19, 20, 24).

3. Wall cladding panel according to Claim 2, **characterized in that** the fixing means (11A, 15A) are formed on the stiffening profiles (11B, 15B).

4. Wall cladding panel according to one of the preceding claims, **characterized in that** the fixing means (11A, 15A) are formed as supporting angles to engage in a fixing profile (6) connected to the building outer wall.

5. Wall cladding panel according to one of Claims 1 to 3, **characterized in that** the fixing means are formed as drilled holes (36), which are used for fixing screws (26) to pass through.

6. Wall cladding panel according to one of the preceding claims, **characterized in that**, to be fixed to a closed building outer wall (1), solar generators having crystalline solar cells (16, 29) are provided.

7. Wall cladding panel according to one of Claims 1 to 5, **characterized in that**, to be fixed to an area of the building outer wall (1) provided with a window pane (2), solar generators having transparent solar cells (10, 23) are provided.

8. Wall cladding panel according to one of the preceding claims, **characterized in that** means for making electrical contact (33) between the solar generators and/or with a connecting socket (34) of an electric conductor (35) arranged on the building outer wall (1) are integrated into the plastic frame (12, 17, 19, 20, 24).

9. Wall cladding panel according to one of the preceding claims, **characterized in that** the elements (13, 14, 21, 22, 27, 28) form a smooth surface on the outside.

## Revendications

1. Panneau de revêtement mural (7, 8) pour un mur extérieur de bâtiment (1), comprenant une vitre extérieure (9) et un générateur solaire (10. 16, 23, 29) fixé sur celle-ci, comprenant un cadre en matière plastique (12, 17, 19, 20, 24) extrudé ou moussé, entourant en affleurement la vitre (9) et le générateur solaire (10, 16, 23, 29), dans lequel sont intégrés des moyens (11A, 15A, 36) pour fixer le panneau de revêtement mural (7,8) sur le mur extérieur de bâtiment (1), **caractérisé en ce que** le cadre en matière plastique présente dans la région du bord alternativement sur des côtés opposés des éléments (13, 14, 21, 22, 27, 28, 27a, 28a) complémentaires les uns aux autres pour un engagement par complémentarité de formes ou un recouvrement par complémentarité de formes de panneaux de revêtement mural (7, 8) adjacents.

2. Panneau de revêtement mural selon la revendication 1, **caractérisé en ce que** des profilés de renforcement (11 B, 15B, 31) sont intégrés dans le cadre en matière plastique (12, 17, 19, 20, 24).

3. Panneau de revêtement mural selon la revendication 2, **caractérisé en ce que** les moyens de fixation (11A, 15A) sont formés sur les profilés de renforcement (11B, 15B).

4. Panneau de revêtement mural selon l'une des revendications précédentes, **caractérisé en ce que** les moyens de fixation (11A, 15A) sont réalisés sous la forme d'équerres de support pour un engagement sur un profilé de fixation (6) lié au mur extérieur de bâtiment.

5. Panneau de revêtement mural selon l'une des revendications 1 à 3, **caractérisé en ce que** les moyens de fixation sont réalisés sous la forme de perçages (36) qui servent au passage de vis de fixation (26).

6. Panneau de revêtement mural selon l'une des revendications précédentes, **caractérisé en ce que** pour une fixation sur un mur extérieur de bâtiment (1) fermé, il est prévu des générateurs solaires avec des cellules solaires cristallines (16, 29).

7. Panneau de revêtement mural selon l'une des revendications 1 à 5, **caractérisé en ce que** pour une fixation sur une surface du mur extérieur de bâtiment (1) munie d'une vitre (2), il est prévu des générateurs solaires avec des cellules solaires transparentes (10, 23).

8. Panneau de revêtement mural selon l'une des revendications précédentes, **caractérisé en ce que** des moyens pour une connexion électrique (33) des générateurs solaires entre eux et/ou à une prise de raccordement (34) d'un conducteur électrique (35) disposé sur le mur extérieur de bâtiment (1) sont intégrés dans le cadre en matière plastique (12, 17, 19,20,24).

9. Panneau de revêtement mural selon l'une des revendications précédentes, **caractérisé en ce que** les éléments (13,14,21,22,27,28) forment une surface lisse vers l'extérieur.
